# EUROPEAN PATENT SPECIFICATION

(11) **EP 1 568 589 B1**
(45) Date of publication and mention of the grant of the patent: **24.11.2010**
(21) Application number: 04029087.6
(22) Date of filing: 08.12.2004
(51) Int. Cl.: B62M 9/12, B62M 25/08

(54) **Motorized bicycle derailleur assembly**
Motorisierte Fahrradgangschaltung
Dérailleur motorisé de bicyclette

(30) Priority: 26.02.2004 US 786228
(43) Date of publication of application: 31.08.2005
(73) Proprietor: SHIMANO INC., Osaka 590-8577 (JP)
(72) Inventor: Ichida, Tadashi, Ikoma, Nara (JP); Fujii, Kazuhiro, Kawachinagano, Osaka (JP)
(74) Representative: GROSSE SCHUMACHER KNAUER VON HIRSCHHAUSEN

(56) References cited:
- EP-A- 1 357 023
- US-A- 5 470 277
- US-A1- 2002 061 797

## Description

### BACKGROUND OF THE INVENTION

### Field of the Invention

This invention generally relates to a motorized bicycle derailleur. More specifically, the present invention relates to a bicycle derailleur that is operated by a motor.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle.

Recently, bicycles have been equipped with electrical components to make riding easier and more enjoyable for the rider. Some bicycles are equipped with automatic shifting units that are automatically adjusted according to the riding conditions by a cycle computer or control unit. In particular, the front and rear derailleurs have recently been automated.

Generally speaking, the front derailleur is typically secured to the seat tube of the bicycle frame or the bottom bracket. Basically, a front derailleur includes a fixed or base member non-movably secured to a bicycle frame, and a movable member supported to be movable relative to the fixed member. Typically, the fixed member is a tubular clamping member that is secured to the seat tube. The movable member typically has a chain guide with a pair of cage plates for contacting and moving a chain between the front sprockets. The movable member is usually biased in a given direction relative to the fixed member by a spring. The movable member is usually moved relative to the fixed member by pulling and/or releasing a shift control cable that is coupled to the front derailleur. The movable member and the fixed member usually are interconnected through pivotal links. In a manually operated front derailleur, a control cable is connected to one of the pivotal links to apply a torque thereto, thereby causing the links to move the movable section. The control cable is fixed to the link in such a position that an operating force applied to the control cable. This force on the cable is converted into a link swinging torque.
In a motorized front derailleur, a motor is used to pull and release a control cable or the motor is connected by a drive train to the front derailleur. For example US 2002/0061797 discloses an electrically operated actuating apparatus for a bicycle derailleur having a driven shaft incorporating a warm screw, said warm screw meshing with a sprocket which is an integral appendix of the articulated arm of the parallelogram system of the derailleur. However, such gear connections can be subject of trouble due to misalignment of the members.

It will be apparent to those skilled in the art from this disclosure that there exists a need for an improved motorized bicycle front derailleur assembly. This invention addresses this need in the art as well as other needs, which will become apparent to those skilled in the art from this disclosure.

### SUMMARY OF THE INVENTION

One object of the present invention is to provide a motorized bicycle front derailleur assembly, which is reliable.

Another object of the present invention is to provide a motorized bicycle front derailleur assembly that is configured and arranged to be easily adjusted.

Another object of the present invention is to provide a motorized bicycle front derailleur assembly that is relatively simple and inexpensive to manufacture and assemble.

The foregoing objects can basically be attained by providing a motorized bicycle front derailleur assembly comprising a motor unit, a front derailleur, and a motor linkage. The motor unit is configured and arranged to rotate an output shaft in a first rotational direction and a second rotational direction that is opposite the first rotational direction. The front derailleur includes a fixing body, a chain guide and a derailleur linkage operatively coupled between the fixing body and the chain guide to move between a first shift position and a second shift position. The motor linkage is operatively coupled to the output shaft of the motor unit and the front derailleur linkage to move the chain guide from the first shift position to the second shift position upon rotation of the output shaft in the first rotational direction and move the chain guide from the second shift position to the first shift position upon rotation of the output shaft in the second rotational direction. The motor linkage includes a drive link configured and arranged relative to the output shaft and the derailleur linkage to shift the chain guide between the first shift position and the second shift position. The drive link of the motor linkage comprises two link ends as pivot ends.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
Figure 1 is a side elevational view of a bicycle equipped with a motorized front derailleur assembly in accordance with the present invention;
Figure 2 is an enlarged side elevational view of the motorized front derailleur illustrated in Figure 1 in a low shift position;
Figure 3 is an enlarged, front elevational view of the motorized front derailleur illustrated in Figures 1 and 2 in the low shift position;
Figure 4 is an enlarged, rear elevational view of the motorized front derailleur illustrated in Figures 1-3 in the low position;
Figure 5 is a top plan view of the motorized rear derailleur illustrated in Figures 1-4 in the low shift position;
Figure 6 is a partial rear elevational view of the motorized rear derailleur illustrated in Figures 1-5, with a portion of the fixing body broken away for purposes of illustration;
Figures 7 is a side elevational view of the motorized front derailleur in the top shift position;
Figure 8 is a front elevational view of the motorized front derailleur in the top shift position;
Figure 9 is a rear elevational view of the motorized front derailleur in the top shift position;
Figure 10 is a partial, rear elevational view of the rear derailleur with a portion of the fixing body broken away for purposes of illustration;
Figure 11 is a partial, rear elevational view of the motorized front derailleur having the motor linkage in a low position and the derailleur linkage being held such that the chain guide remains in a top position;
Figure 12 is a front perspective view of the motorized front derailleur mounting member for the front derailleur illustrated in Figures 1-11 in accordance with the present invention;
Figure 13 is a rear perspective view of the motorized front derailleur mounting member illustrated in Figure 12;
Figure 14 is a front elevational view of the motorized front derailleur mounting member illustrated in Figures 12 and 13;
Figure 15 is a rear elevational view of the motorized front derailleur mounting member illustrated in Figures 12-14;
Figure 16 is a right side elevational view of motorized front derailleur mounting member illustrated in Figures 12-15;
Figure 17 is a top plan view of the motorized front derailleur mounting member illustrated in Figures 12-16;
Figure 18 is a cross-sectional view of the motorized front derailleur mounting member illustrated in Figures 12-17 as seen along section line 18-18 of Figure 15;

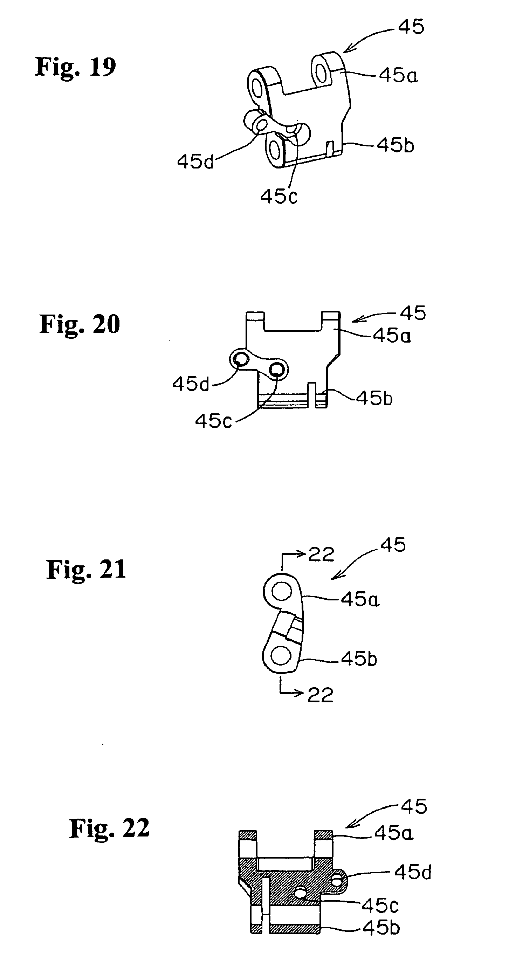

Figure 19 is a side perspective view of the right or outer link for the front derailleur illustrated in Figures 1-11 in accordance with the present invention;
Figure 20 is a right side elevational view of the right link illustrated in Figure 19;
Figure 21 is a rear side elevational view of the right link illustrated in Figures 19 and 20;
Figure 22 is a cross-sectional view of the right link illustrated in Figures 19-21 as seen along section line 22-22 of Figure 21;
Figure 23 is a rear elevational view of the motor link for the front derailleur illustrated in Figures 1-11 in accordance with the present invention;
Figure 24 is a longitudinal cross-sectional view of the motor link illustrated in Figure 23 as seen along section line 24-24;
Figure 25 is a top end elevational view of the motor link illustrated in Figures 23 and 24;
Figure 26 is a side elevational view of a saver link for the front derailleur illustrated in Figures 1-11 in accordance with the present invention;
Figure 27 is a side elevational view of the saver link illustrated in Figure 26;
Figure 28 is an inside elevational view of the saver link illustrated in Figures 26 and 27;
Figure 29 is a bottom elevational view of the saver link illustrated in Figures 26-28 in accordance with the present invention;
Figure 30 is a side elevational view of the saver spring for the front derailleur illustrated in Figures 1-11 in accordance with the present invention;
Figure 31 is an elevational view of the saver spring illustrated in Figure 30;

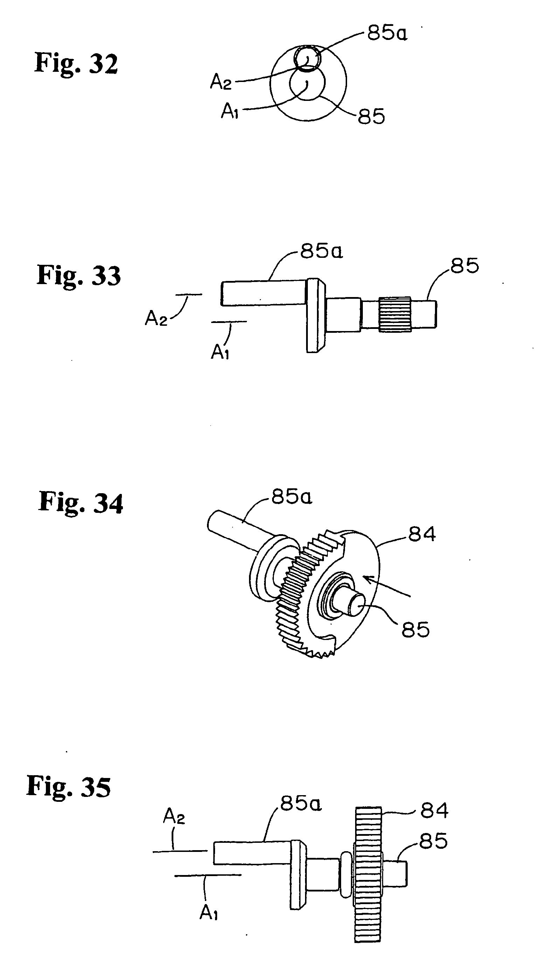

Figure 32 is an axial view of the output shaft for the front derailleur illustrated in Figures 1-11 in accordance with the present invention;
Figure 33 is a side view of the output shaft illustrated in Figure 32;
Figure 34 is a perspective view of the output shaft with the output gear mounted thereto in accordance with the present invention;
Figure 35 is a side elevational view of the output shaft with the output shaft gear mounted thereto;
Figure 36 is a front elevational view of the front derailleur motor unit with the cover removed;
Figure 37 is a front elevational view of the motor unit with the cover and printed circuit board removed for purposes of illustration;
Figure 38 is a front elevational view of the motor unit with the cover, the printed circuit board and the sensor wheel removed to illustrate the drive train of the front derailleur motor unit;
Figure 39 is an inside elevational view of the motor casing or housing for the front derailleur motor unit;
Figure 40 is an outside elevational view of the casing or housing illustrated in Figure 39 for the front derailleur motor unit;
Figure 41 is a side elevational view of the casing or housing illustrated in Figures 39 and 40 for the front derailleur motor unit;
Figure 42 is a cross-sectional view of the casing or housing illustrated in Figures 39-41 for the front derailleur motor unit as seen along section line 42-42 of Figure 39;
Figure 43 is an enlarged, partial cross-sectional view of the lower portion of the casing or housing of the front derailleur motor unit having the output shaft and the output shaft gear attached thereto;
Figure 44 is a front perspective view of the cover for the front derailleur motor unit;
Figure 45 is a front elevational view of the cover for the front derailleur motor unit illustrated in Figure 44;
Figure 46 is an inside elevational view of the cover for the front derailleur motor unit illustrated in Figure 44 and 45; and
Figure 47 is a cross-sectional view of the cover for the front derailleur motor unit.

### DETAILED DESCRIPTION OF THE PREFERRED EMBODIMENTS

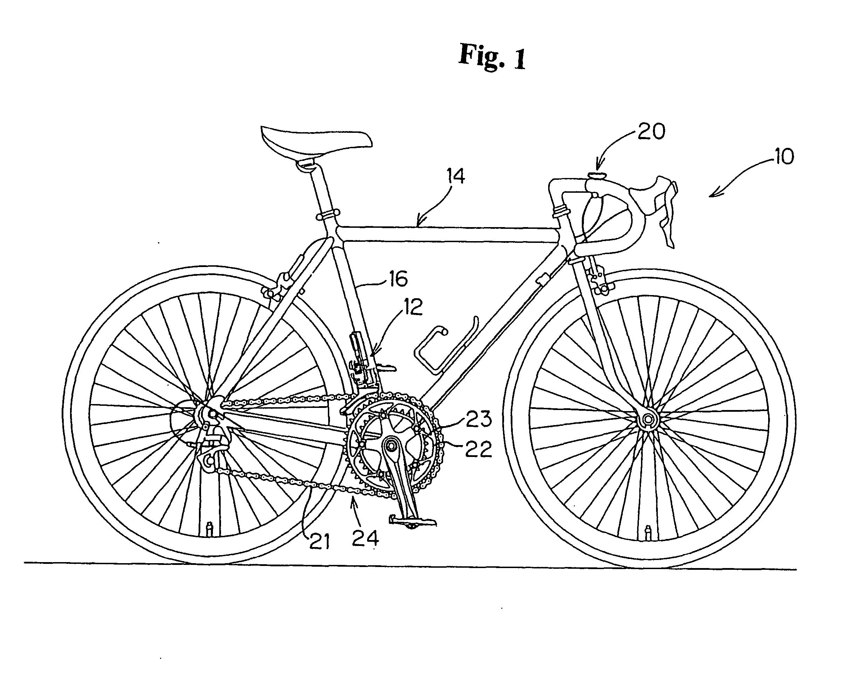

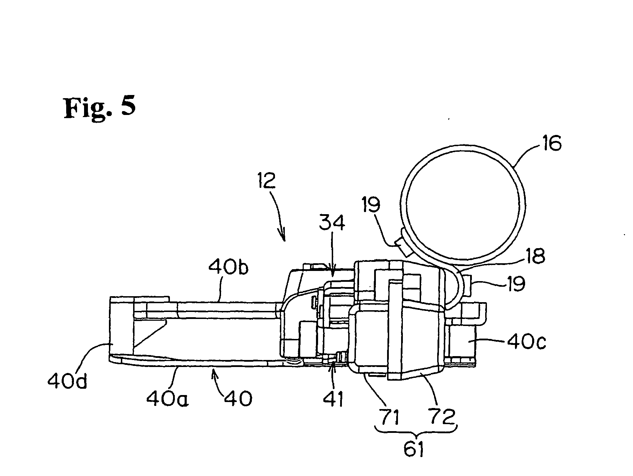

Referring initially to Figure 1, a bicycle 10 is illustrated that is equipped with a motorized front derailleur assembly 12 in accordance with a first embodiment of the present invention. The bicycle 10 further includes a bicycle frame 14 having a seat tube 16 with the motorized front derailleur assembly 12 mounted to the seat tube 16 by a bracket 18 and fasteners or bolts 19 as seen in Figures 1-5. The front derailleur 12 is operated in a conventional manner by an electronic shifting unit 20 coupled to an electrical control device via an electric shift cable to move a chain 21 between at least two front sprockets or chain wheels 22 and 23 of the bicycle drive train 24. Each control device is preferably provided with a pair of shift buttons that are operatively coupled to the electronic shifting unit 20 , preferably in accordance with U.S. Patent No. 6,073,730 (assigned to Shimano, Inc.) and U.S. Patent No. 6,212,078 (assigned to Shimano, Inc.).

Since these parts of bicycle 10 are well known in the art, these parts will not be discussed or illustrated in detail herein, except as they are modified to be used in conjunction with the present invention. Moreover, various conventional bicycle parts, which are not illustrated and/or discussed herein, can also be used in conjunction with the present invention.

The motorized front derailleur assembly 12 basically includes a motorized front derailleur unit 31, a motorized front derailleur mounting member 32, a front derailleur motor unit 33 and a motor linkage 34. The motorized front derailleur unit 31, the front derailleur motor unit 33 and the motor linkage 34 are all mounted on the motorized front derailleur mounting member 32 that is configured and arranged to fixedly couple the motorized derailleur assembly 12 to the seat tube 16 of the bicycle frame 14.

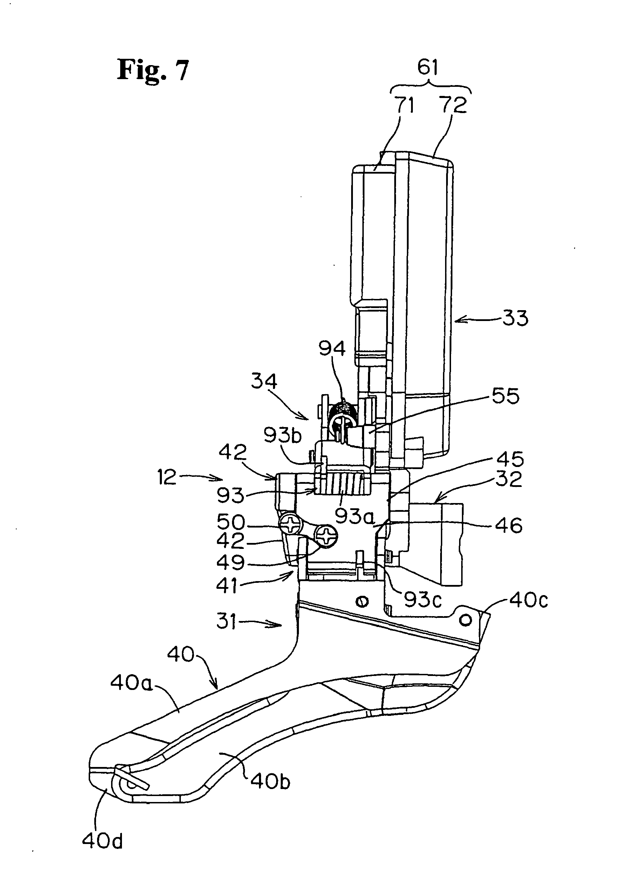

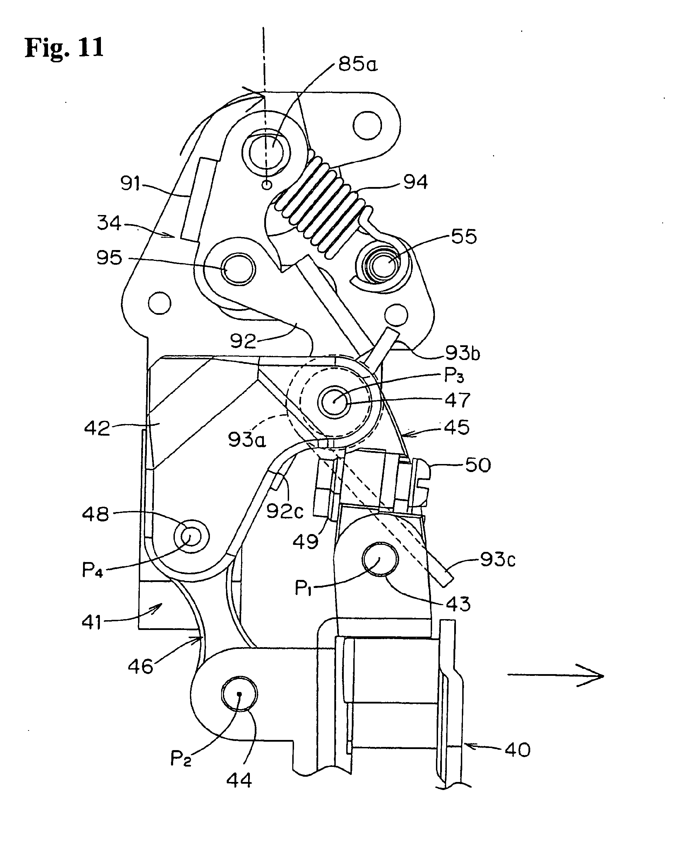

As explained more detailed later, the motorized front derailleur assembly 12 is constructed to move between at least a below shift position as illustrated in Figures 1-6 and a top shift position as illustrated in Figures 7-10. Moreover, as illustrated in Figure 11, the motor linkage 34 is designed with a derailleur protection arrangement such that the derailleur motor unit 33 can operated even though the motorized front derailleur unit 32 becomes jammed. The basic operation of shifting the chain 21 is relatively conventional, and thus, will not be illustrated shown in detail herein.

As best seen in Figures 1-11, the front derailleur unit 31 basically includes a chain guide 40, a derailleur linkage 41 and a fixing body 42 that is part of the mounting member 32, as explained below. The derailleur linkage 41 together with the chain guide 40 and the fixing body 42 preferably form a four-bar linkage that controls the lateral movement of the chain guide 40. The derailleur linkage 41 is configured and arranged to operatively couple between the fixing body 42 and the chain guide 40 for lateral movement of the chain guide 40 between at least a top shift position and a low shift position, i.e., at least first and second shift positions. More specifically, the chain guide 40 is movably coupled to the fixing body 42 by a derailleur linkage 41 that is operatively coupled to the motor linkage 34 to move the chain guide 40 between a first shift position and a second shift position in response to operation of front derailleur motor unit 33. This lateral movement of the chain guide 40 causes the chain 21 to be shift between the sprockets 22 and 23 of the bicycle drive train 24.

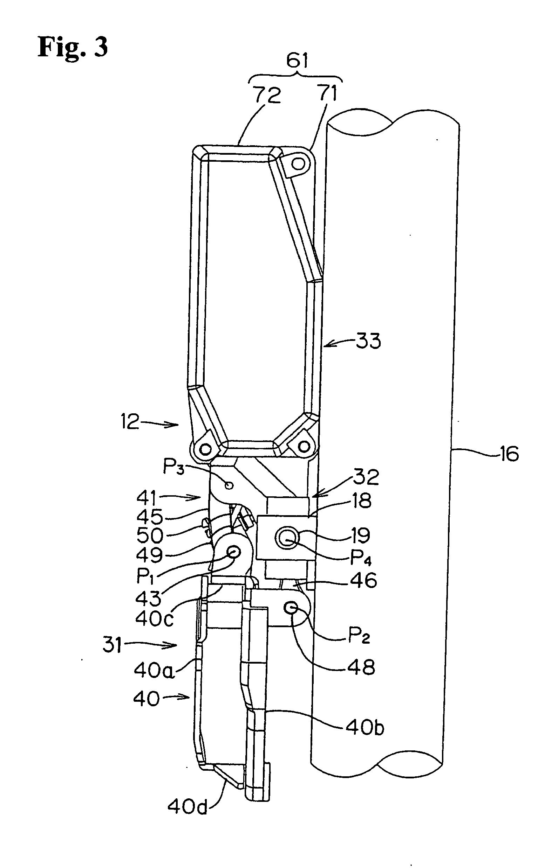

The chain guide 40 is preferably constructed of a hard rigid material. For example, the chain guide 40 is preferably constructed of a metal material such as a rigid sheet metal that is bent to the desired shape. As best seen in Figures 3, 4, 8 and 9, the chain guide 40 has first and second shifted pivot points P₁ and P₂, respectively, for pivotally securing the derailleur linkage 41 to the chain guide 40. In particular, pivot pins 43 and 44 pivotally couple the chain guide 40 to the derailleur linkage 41. The chain guide 40 has a chain receiving slot that is formed by a pair of vertical shift plates 40a and 40b. The vertical shift plates 40a and 40b are adapted to engage the chain 21 and thus move the chain 21 in a direction substantially transverse to the bicycle 10. The shift plates 40a and 40b are connected together by a pair of plates 40c and 40d. The upper plate 40c is integrally formed between the shift plates 40a and 40b. The lower plate 40d has one end that is integrally formed with the outer shift plate 40b and the other end that is attached to the inner shift plate 40a via a fastener, such as a screw or rivet.

The derailleur linkage 41 basically includes a first or outer link 45 and a second or inner link 46 with first ends pivotally coupled to the fixing body 42 and with second ends pivotally coupled to the chain guide 40. Specifically, the first link 45 has a first end 45a pivotally coupled to a first fixed pivot point P₃ of the fixing body 42 by a pivot pin 47 and a second end 45b pivotally coupled to the first shifted pivot point P₁ of the chain guide 40 by the pivot pin 43. Similarly, the second link 46 has a first end 46a pivotally coupled to a second fixed pivot point P₄ of the fixing body 42 by a pivot pin 48 and a second end 46b pivotally coupled to the second shifted pivot point P₂ of the chain guide 40 by the pivot pin 44.

As apparent from the discussion above, the derailleur linkage 41 is preferably a four-bar linkage that is formed by the first or outer link 45, the second or inner link 46, the portion of the chain guide 40 extending between the first and second shifted pivot points P₁ and P₂, and the portion of the fixing body 42 extending between the first and second pivot fixed points P₃ and P₄. Thus, pivot axes of the pivot points P₁, P₂, P₃ and P₄ are all substantially parallel to each other.

When the derailleur linkage 41 holds the chain guide 40 in its extended most position, the chain guide 40 is located over the outermost sprocket 22, i.e., the furthest sprocket from the seat tube 16. When the derailleur linkage 41 holds the chain guide 40 in its retracted most position, the chain guide 40 is located over the innermost sprocket 23, i.e., the closet sprocket to the seat tube 16. These movements of the chain guide 40 and the derailleur linkage 41 are controlled by the shifting unit.

The first or outer link 45 includes two threaded holes 45c and 45d that receive a top position adjustment screw 49 and a low position adjustment screw 50. The two threaded holes 45c and 45d of the first or outer link 45 and the adjustment screws 49 and 50 form a mechanical adjustment device that finely adjusts the top and low positions of the chain guide 40. Thus, the mechanical adjustment device is configured and arranged to change the first and second shift positions of the chain guide 40 relative to the fixing body 42. In other words, the first or low adjustment screw 50 is configured and arranged to change the first or low shift position of the chain guide 40 relative to the fixing body 42, while the second or top adjustment screw 49 is configured and arranged to change the second or top shift position of the chain guide 40 relative to the fixing body 42. While the adjustment screws 49 and 50 are mounted on the first or outer link 45, it will be apparent from this disclosure that the adjustment screws 49 and 50 can be mounted on any one of the fixing body 42, the chain guide 40 and the links 45 and 46 with a free end of the adjustment screw contacting one of the fixing body 42, the chain guide 40 and the links 45 and 46 or the motor linkage 34 in which the adjustment screw is not threadedly coupled thereto. Also it will be apparent from this disclosure that an adjustment screw can be threadedly coupled to one of the motor linkage 34 and the derailleur linkage 41 with a free end of the adjustment screw contacting one of the motor linkage 34 and the derailleur linkage 41 in which the adjustment screw is not threadedly coupled thereto. In the illustrated embodiment, the first or low adjustment screw 50 is configured and arranged to change the first or low shift position of the chain guide 40 relative to the fixing body 42 by the free end of the low adjustment screw 50 contacting the fixing body 42, while the second or top adjustment screw 49 is configured and arranged to change the second or top shift position of the chain guide 40 relative to the fixing body 42 by the free end of the top adjustment screw 49 contacting the motor linkage 34 as explained below.

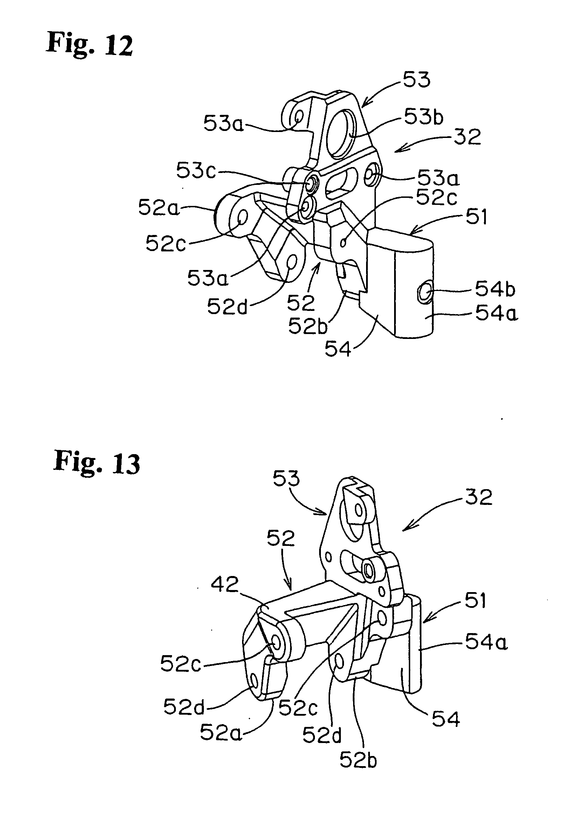

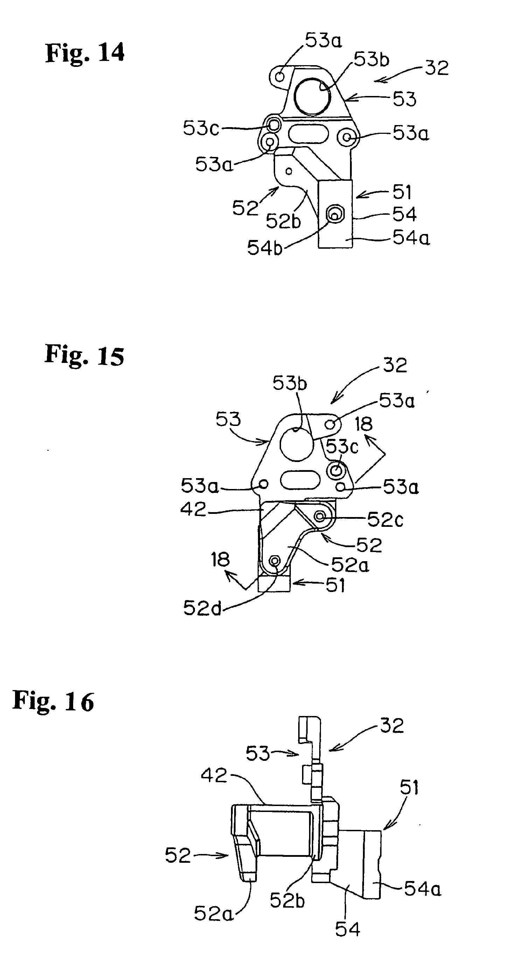

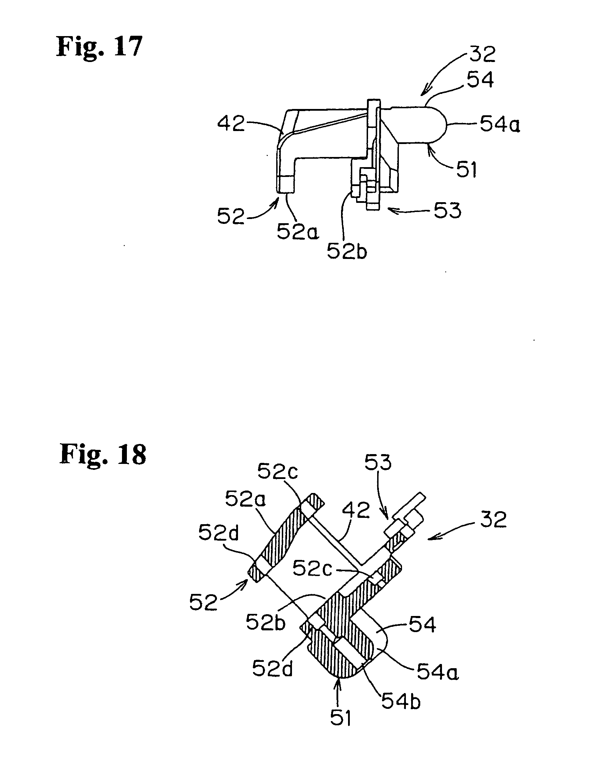

As best seen in Figures 12-18, the motorized front derailleur mounting member 32 basically includes a bicycle frame mounting portion 51, a front derailleur mounting portion 52 and a motor unit mounting portion 53. The bicycle frame mounting portion 51, the front derailleur mounting portion 52 and the motor unit mounting portion 53 are integrally formed as a one-piece, unitary member. The front derailleur mounting portion 52 and the motor unit mounting portion 53 form a derailleur motor support structure.

The bicycle frame mounting portion 51 is configured and arranged to be coupled to the seat tube 16 of the bicycle frame 14 by the bracket 18. The bicycle frame mounting portion 51 includes a projection 54 that projects outwardly from a first side of the motorized front derailleur mounting member 32 to a free end that forms a curved front surface 54a with a threaded hole 54b. The curved front surface 54a is configured and arranged to contact a corresponding curved portion of the bracket 18 such that the motorized front derailleur mounting member 32 can not rotated relative to the bracket 18. One of the fasteners or bolts 19 is threaded into the threaded hole 54b of the bicycle frame mounting portion 51, while the other two fasteners or bolts 19 are threaded into the threaded holes formed the seat tube 16 such that the motorized front derailleur mounting member 32 is secured to the bicycle frame 14 via the bracket 18.

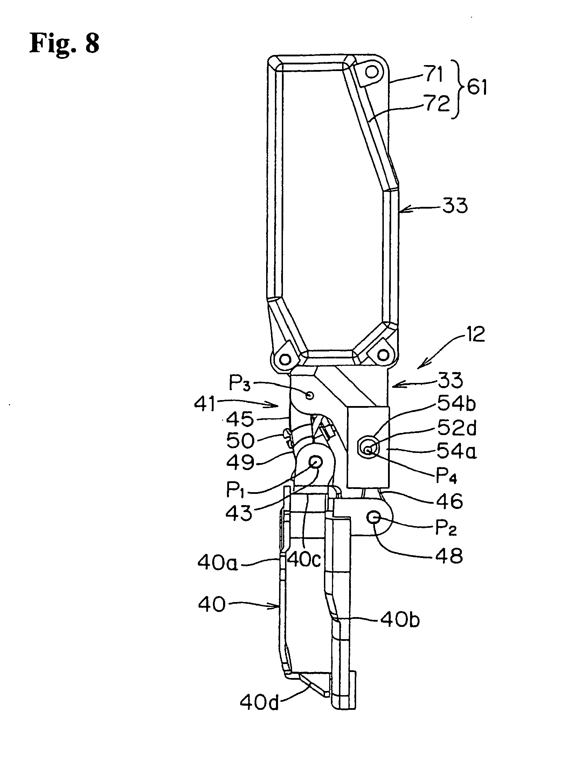

The front derailleur mounting portion 52 is configured and arranged to be coupled to a derailleur linkage 41 of a front derailleur unit 31. In particular, the front derailleur mounting portion 52 has first and second link supporting parts 52a and 52b that are configured and arranged to define a link receiving space therebetween for receiving the first and second links 45 and 46. Thus, the first and second link supporting parts 52a and 52b are configured and arranged to form the front derailleur fixing body 42. The first and second link supporting parts 52a and 52b each include a first pivot pin mounting hole 52c forming the first pivot axis of the first fixed pivot point P₃ and a second pivot pin mounting hole 52d forming the second fixed pivot point P₄. The first and second link supporting parts 52a and 52b are configured and arranged such that the first and second link supporting parts 52a and 52b are spaced different at the first pivot pin mounting holes 52c than at the second pivot pin mounting holes 52d to accommodate the different sizes of the first and second links 45 and 46. The second pivot axis of the second fixed pivot point P₄ is substantially parallel to the first pivot axis of the first fixed pivot point P₃. The first pivot axis of the second pivot pin mounting holes 52d that defines the second fixed pivot point P₄ passes through the threaded hole 54b as best seen in Figure 8.

The motor unit mounting portion 53 is configured and arranged to be coupled to the front derailleur motor unit 33. The motor unit mounting portion 53 includes a plurality (three) of threaded holes 53a that form a plurality mounting parts of the motor unit mounting portion 53. The motor unit mounting portion 53 also includes an output shaft cutout 53b that has a center axis that is substantially parallel to the pivot axes of the first and second fixed pivot points P₃ and P₄ of the front derailleur mounting portion 52. The output shaft cutout 53b of the motor unit mounting portion 53 is a hole surrounded by material of the motor unit mounting portion 53. The motor unit mounting portion 53 further includes a pin mounting hole 53c in which a spring mounting pin 55 is mounted.

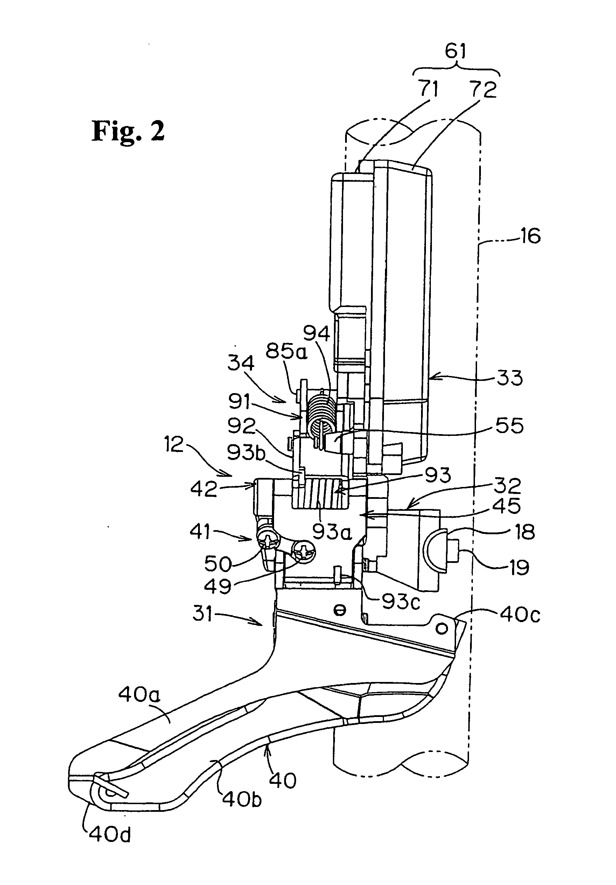

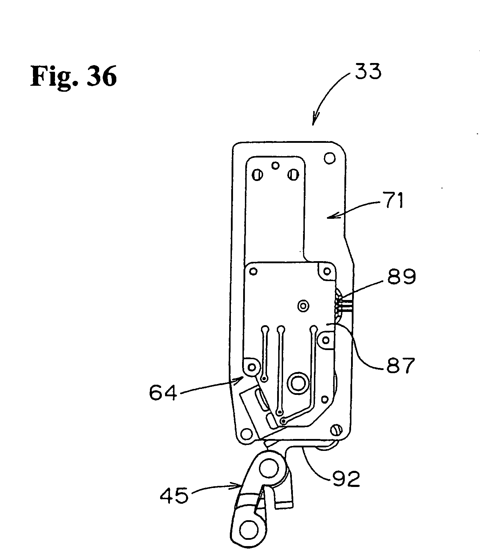

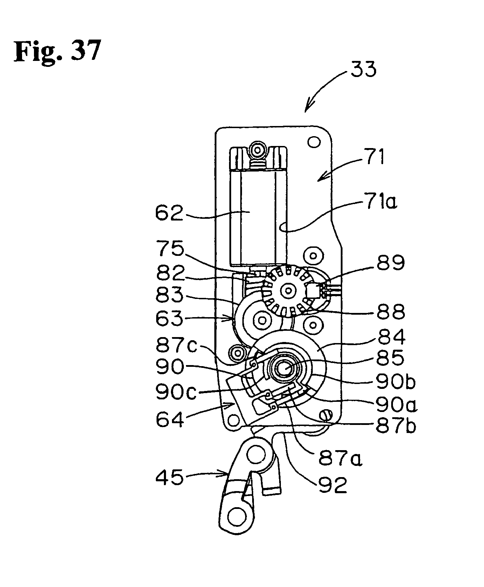

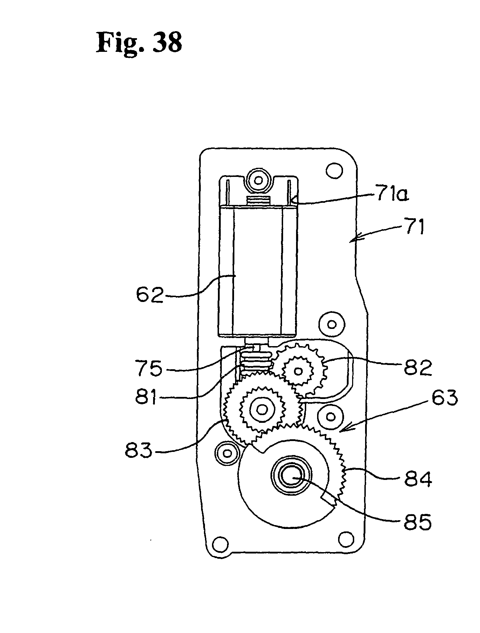

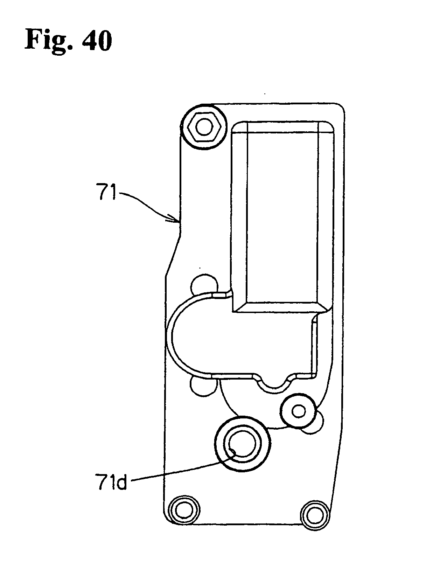

Referring now to Figures 2, 7, and 36-47, the front derailleur motor unit 33 basically includes a derailleur motor unit support structure 61 (Figures 2, 7, 36 and 39-47), a derailleur motor 62 (Figures 37 and 38), a motor drive train 63 (Figures 37 and 38), and a position control device 64 (Figures 36 and 37). The front derailleur motor unit 33 is mounted to the motor unit mounting portion 53 that forms a derailleur motor support. The front derailleur motor unit 33 is operatively coupled the chain guide 40 by the motor linkage 34 and the derailleur linkage 41. Thus, operation of the front derailleur motor unit 33 by the shifting unit 20 causes the chain guide 40 to be shifted between the low and top shift positions.

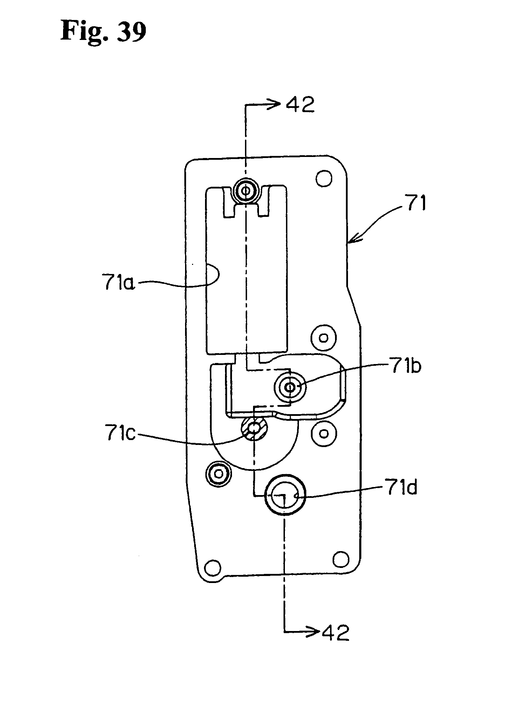

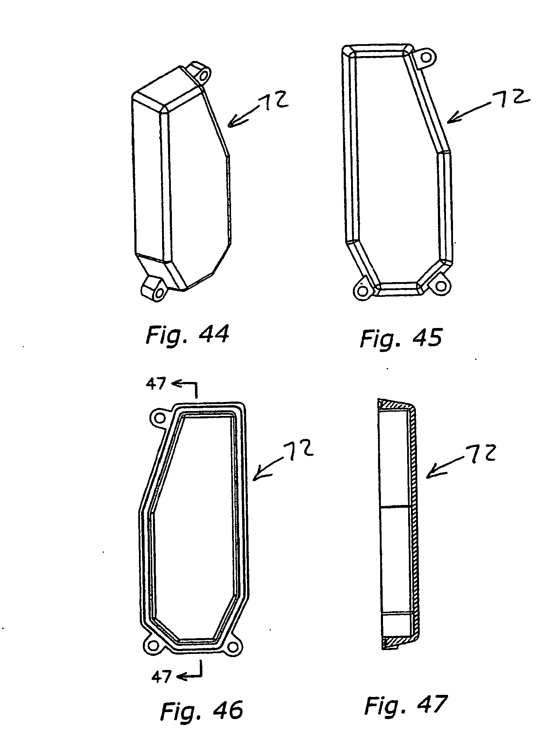

The derailleur motor unit support structure 61 basically includes a motor unit casing or housing 71 (Figures 39-43) and a motor unit cover 72 (Figures 44-47). The casing 71 and the cover 72 are configured and arranged to enclose and support the derailleur motor 62 and the motor drive train 63. Preferably, the casing 71 and the cover 72 are constructed of a rigid, lightweight material such as a hard plastic material.

As seen in Figures 37-39, the casing 71 includes a recess 71a for receiving and supporting the front derailleur motor unit 33 therein. The casing 71 also includes a pair of gear shaft supporting bores 71b and 71c and an output shaft hole 71d that are configured and arranged to support the motor drive train 63.

As seen in Figure 38, the derailleur motor 62 is mounted to the casing 71 of the derailleur motor unit support structure 61. The derailleur motor 62 is a reversible electric motor that is powered by a battery source or a generator. The derailleur motor 62 is electrically coupled to the shifting unit 20 by an electrical cord and to a power source (battery source or generator) by another electrical cord. The derailleur motor 62 has a driving shaft 75 that is operatively coupled to the motor drive train 63. Reversible electric motors such as the derailleur motor 62 are well known. Thus, the derailleur motor 62 will not be discussed or illustrated in detail.

As seen in Figures 37 and 38, the motor drive train 63 basically includes a worm gear 81, a first intermediate gear 82, a second intermediate gear 83, and an output gear 84. The output gear 84 is mounted on an output shaft 85. The motor drive train 63 transmits rotational movement of the driving shaft 75 of the derailleur motor 62 to the motor linkage 34 via the output shaft 85. In particular, the worm gear 81 is mounted on the driving shaft 75 of the derailleur motor 62, with the spiral tooth of the worm gear 81 engaged with a first set of teeth of the first intermediate gear 82. The first intermediate gear 82 has a second set of teeth that engages a first set of teeth of the second intermediate gear 83, which in turn has a second set of teeth that engages the teeth of the output gear 84. The output gear 84 is mounted on the output shaft 85, which in turn is coupled to the motor linkage 34. Thus, the motor drive train 63 is disposes between the driving shaft 75 of the derailleur motor 62 and the output shaft 85.

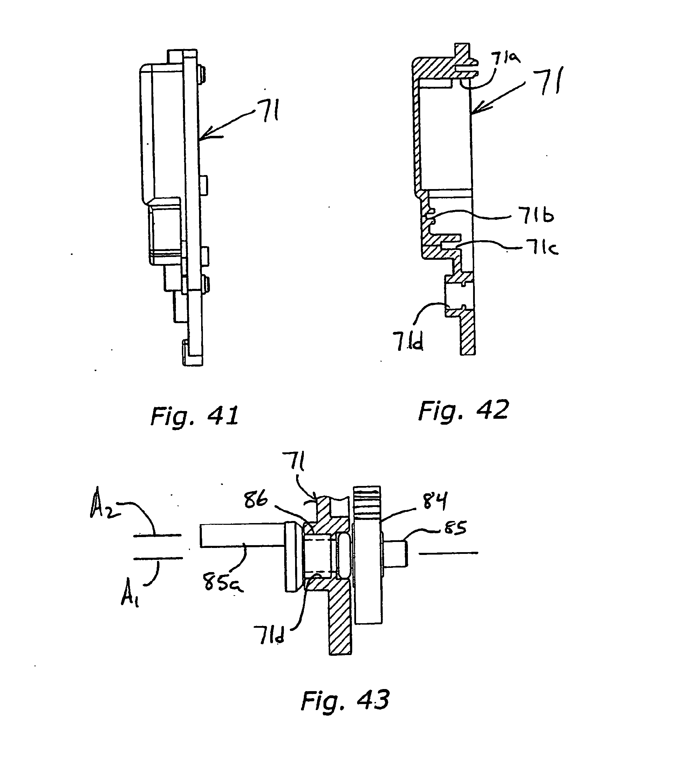

As seen in Figure 43, the output shaft 85 is rotatably supported in the output shaft hole 71d of the casing 71 by a bearing 86. Of course, it will be apparent from this disclosure that the bearing 86 can be mounted on the motorized derailleur mounting member 32 instead of the casing 71 such that the output shaft 85 is rotatably supported on the motorized derailleur mounting member 32. In any event, the output shaft 85 is configured and arranged to rotate about a rotational axis A₁ between a first rotational position and a second rotational position that is opposite the first rotational direction by rotation of the driving shaft 75 of the derailleur motor 62. The output shaft 85 includes an eccentric drive pin 85a having an axis A₂ that is offset from a rotational axis A₁ of the output shaft 85.

As seen in Figures 36 and 37, the position control device 64 basically includes a printed circuit board 87, a position sensor element 88, a photo interrupter 89 and a top-low brush sensor 90. The printed circuit board 87 has a plurality of electrical circuits formed thereon in a conventional manner for controlling the operation of the derailleur motor 62 via the shifting unit 20. More specifically, the printed circuit board 87 has an electrical contact plate with electrical contact brushes 87a, 87b and 87c coupled thereto in a cantilever fashion. These brushes 87a, 87b and 87c contact the top-low brush sensor 90 that is mounted to the output gear 84. In other words, the top-low brush center 90 rotates together with the output gear 84. The brushes 87a, 87b and 87c selectively contact three electrical contacts. In other words, the brushes 87a, 87b and 87c cooperate with the contacts 90a, 90b and 90c to complete electrical circuit that drives the derailleur motor 62 in either the first rotational direction or the second (opposite) rotational direction. The position of the output shaft in 85 is determined by utilizing the position sensor element 88 and the photo interpreter 89. The photo sensor element 88 is mounted on the faced intermediate gear 82 such that the position sensor 88 rotates therewith. The position sensor element 88 is provided with a plurality of circumstantially spaced apart openings that are detected by the photo interpreter 89. In other words, the photo interpreter 89 senses the openings in the position 88 to determine the relative position of the first intermediate gear 82. Since the position of the first intermediate gear 82 directly relates to the position of the output shaft 85, the position of the output shaft 85 can easily be determined. Thus, the shifting unit 20 can determine the position of the chain guide 20 based on the relative position of the first intermediate gear 82.

Referring back to Figures 1-11, the motor linkage 34 basically includes a drive or motor link 91, a saver link 92, a saver link biasing element 93 and a position biasing element 94. The saver link 92 and the saver link biasing element 93 form a jamming protection arrangement. The motor linkage 34 is operatively coupled between the eccentric drive pin 85a of the output shaft 85 and the derailleur linkage 41. This jamming protection arrangement is configured and arranged to move between a force transmitting state and a force override state.

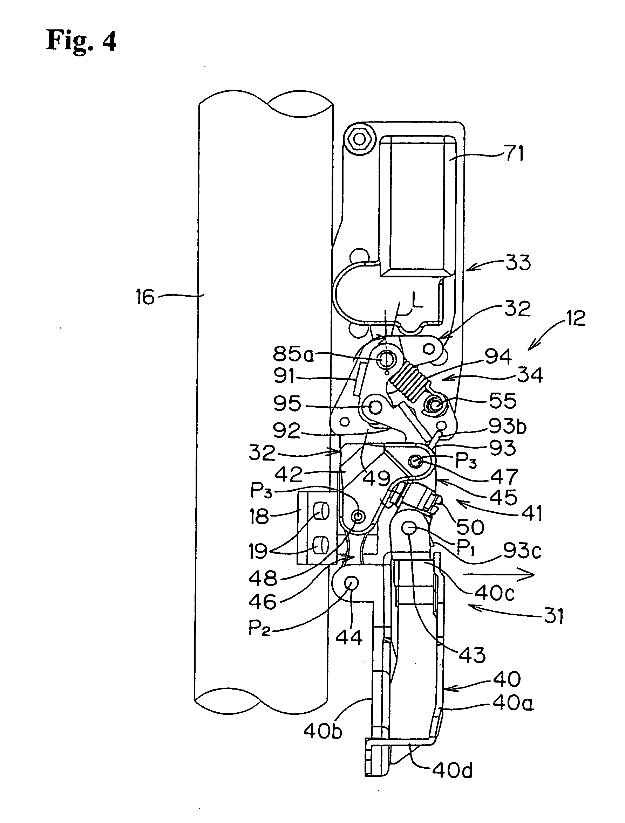

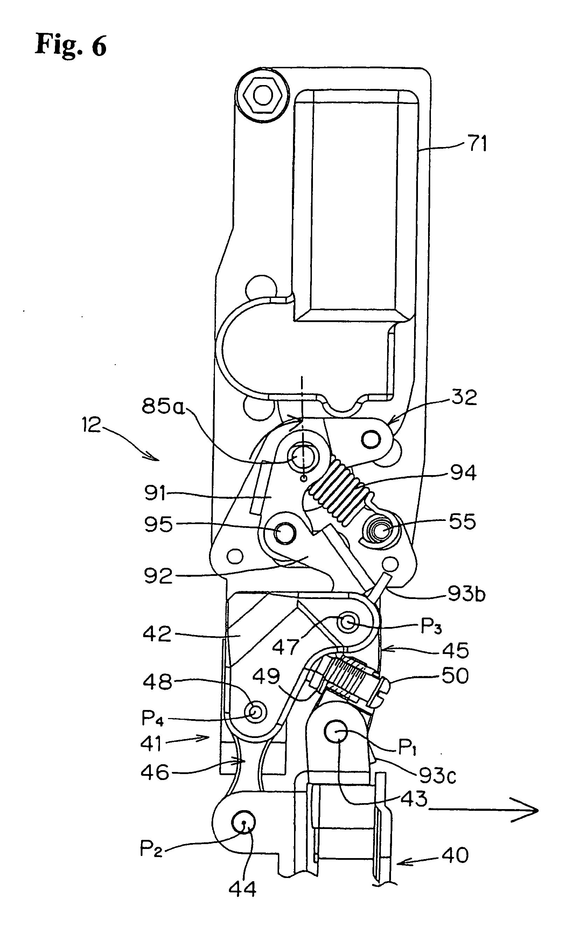

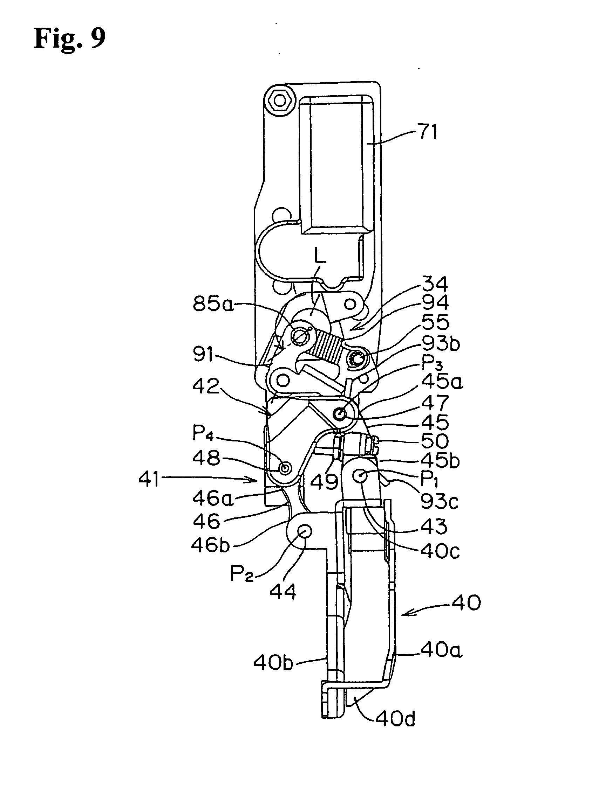

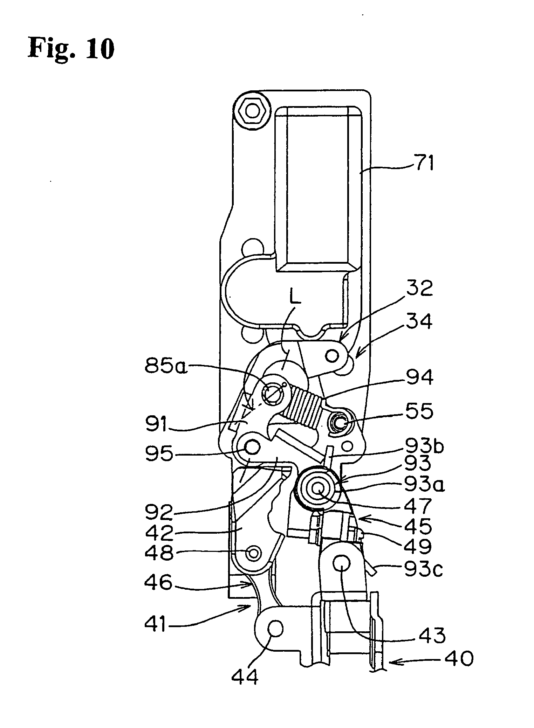

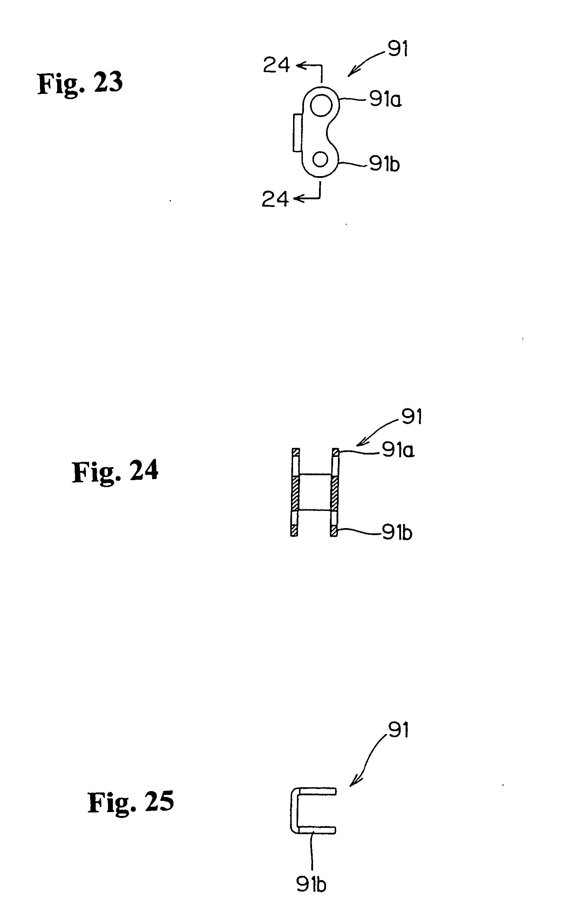

As seen in Figures 4, 6, 9, 10 and 11, the drive link 91 is configured and arranged relative to the output shaft 85 and the derailleur linkage 41 to shift the chain guide 40 between the first shift position and a second shift position. The drive link 91, as particularly seen in Figures 23-25, has a first drive link end 91a and a second drive link end 91b. The first drive link end 91a is mounted on the eccentric drive pin 85a of the output shaft 85 such that the eccentric drive pin 85a can rotate within the holes formed in the first drive link end 91a. The second drive link end 91b is pivotally coupled to the saver link 92 by a pivot pin 95. Thus, when the output shaft 85 is rotated, the drive link 91 is moved or shifted. The drive link 91 has a longitudinal axis L extending between the first and second drive link ends 91a and 91b. The longitudinal axis L of the drive link 91 has a first orientation (Figures 4 and 6) when the chain guide 40 is in the first shift position and a second orientation (Figures 9 and 10) when the chain guide 40 is in the second shift position with the first and second orientations of the longitudinal axis L of the drive link 91 being changed less than forty five degrees.

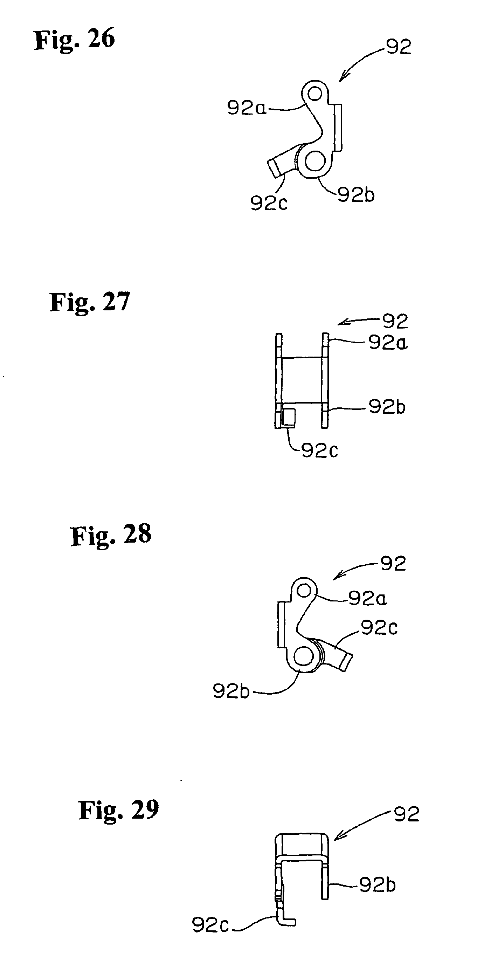

As best seen in Figures 26-29, the saver link 92 preferably has a first saver link end 92a, a second saver link end 92b and a control or stop flange 92c. The first saver link end 92a of the saver link 92 is pivotally coupled to the second drive link end 91b of the drive link 91 by the pivot pin 95. The second saver link end 92b is operatively coupled to the first or outer link 45 of the derailleur linkage 41. The control or stop flange 92c extends from the second saver link end 92b and is arranged to contact the top adjustment screw 49 when the motor linkage 34 is driven to the top shift position as seen in Figure 10. Thus, the second or top adjustment screw 49 is configured and arranged to change the second or top shift position of the chain guide 40 relative to the fixing body 42 by the free end of the top adjustment screw 49 contacting the control or stop flange 92c of the saver link 92.

In adjusting the front derailleur unit 31, the front derailleur unit 31 is mounted to the frame 12 by the motorized front derailleur mounting member 32 and bracket 18. Then the top shift position is set by adjusting the top adjustment screw 49 so that the chain guide 40 is disposed over the front chain wheel 22. This adjustment of the top shift position causes the relative orientation between the outer link 46 and the saver link 92 to change. In particular, the adjusting of the top adjustment screw 49 changes the relative orientation between the outer link 46 and the saver link 92 by counteracting the urging force of the saver link biasing element 93, i.e., compressing the saver link biasing element 93. Once the top shift position has been set, the low shift position is also changed by the adjusting of the top adjustment screw 49 because the chain guide 40 moves with the outer link 46. Thus, the low position is next set by using the low adjustment screw 50, which contacts the fixing body 4, such that the chain guide 40 is disposed over the smaller front chain wheel 23. In other words, the adjusting of the low adjustment screw 50 changes the relative orientation between the outer link 46 and the saver link 92 when the chain guide 40 is disposed over the front chain wheel 23 by further counteracting the urging force of the saver link biasing element 93, i.e., further compressing the saver link biasing element 93.

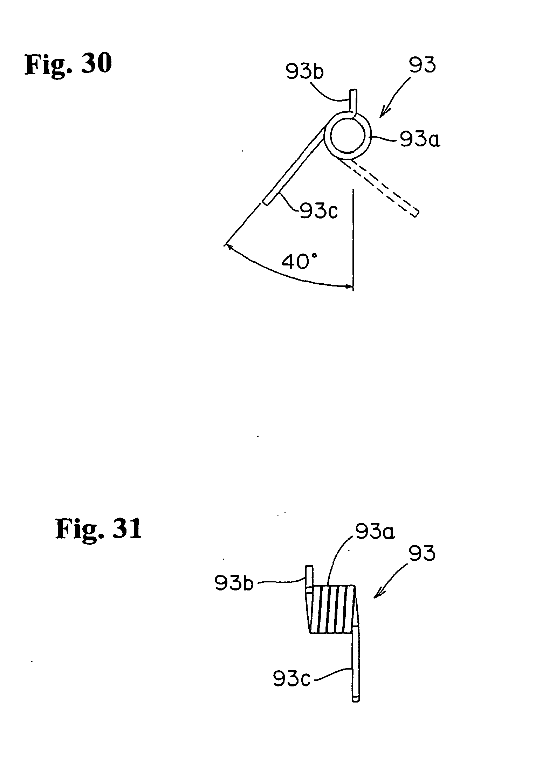

As best seen in Figure 30 and 31, the saver link biasing element 93 is preferably a torsion spring having a coiled portion 93a, a first leg portion 93b and a second leg portion 93c. The coiled portion 93a is located about the pivot pin 47 that connects the saver link 92 to the first or outer link 45. The first leg portion 93b of the saver link biasing element 93 engages the saver link 92, while the second leg portion 93b contacts the first or outer link 45 of the derailleur linkage 41. Thus, the saver link 92 is biased in a counter clockwise direction about pivot pin 47 as viewed from the rear of the derailleur. Likewise, the first or outer link 45 is also biased in a counterclockwise direction about the pivot pin 47 as viewed from the rear of the derailleur. In other words, the saver link biasing element 93 is configured and arranged to apply an urge force that normally maintains a substantially rigid connection between the drive link 91 and the derailleur linkage 41. Accordingly, the saver link 92 is pivotally coupled to the derailleur linkage 41 and the saver link biasing element 93 is operatively coupled between the saver link 92 and the derailleur linkage 41 to urge the saver link 92 from the force override state to the force transmitting state such that a substantially rigid connection is normally maintained between the saver link and the derailleur linkage 41.

Thus, as seen in Figure 11, if the chain guide 40 is stuck in the top position, and the motor linkage 34 is driven by the output shaft 85 to a low shift position, the saver link 92 will rotate in a clockwise direction in about the pivot pin 47 as viewed from the rear of the derailleur against the urging force the first leg portion 93b of the saver link biasing element 93. Thus, a non rigid connection is formed between the saver link 92 and the derailleur linkage 41 by utilizing the saver link 92 and the saver link biasing element 93. In other words, the saver link 92 and the saver link biasing element 93 form a non-rigid connection that connects a second drive link end 91b of the drive link 91 to the derailleur linkage 41. This non-rigid connection forms the jamming protection arrangement.

The position biasing element 94 is preferably a tension spring that has a first end coupled to the eccentric drive pin 85a and a second end connected to the spring mounting pin 55 of the motor unit mounting portion 53. The position biasing element 94 is configured and arranged such that the urging force of the position biasing element 94 holds the motor linkage 34 in either the top position or the low position. In other words, when the motor linkage 34 is in the top position, the line of force of the position biasing element 94 is offset from the rotational axis A₁ of the output shaft 85 to apply a clockwise force on the output shaft 85 as viewed from the rear of the derailleur. However, when the motor linkage 34 moved to the low position, the line of force of the position biasing element 94 is such that a counterclockwise force is applied to the output shaft 85. Accordingly, the position biasing element 94 is configured and arranged to insist assist in the holding chain guide 40 in either the top or low position when the motor is no longer energized.

As used herein, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention.

## Claims

1. A motorized bicycle front derailleur assembly (12) comprising:
a motor unit (33) configured and arranged to rotate an output shaft (85) in a first rotational direction and a second rotational direction that is opposite the first rotational direction;
a front derailleur (31) including a fixing body (42), a chain guide (40) and a derailleur linkage (41) operatively coupled between the fixing body (42) and
the chain guide (40) to move between a first shift position and a second shift position; and
a motor linkage (34) operatively coupled to the output shaft (85) of the motor unit (33) and the front derailleur linkage (41) to move the chain guide (40) from the first shift position to the second shift position upon rotation of the output shaft (85) in the first rotational direction and move the chain guide (40) from the second shift position to the first shift position upon rotation of the output shaft (85) in the second rotational direction,
the motor linkage (34) including a drive link (91) configured and arranged relative to the output shaft (85) and the derailleur linkage (41) to shift the chain guide (40) between the first shift position and the second shift position
**characterized in that**
the drive link (91) comprises two link ends (91a,91b) as pivot points.

2. The motorized bicycle front derailleur assembly (12) according to claim 1, wherein the output shaft (85) includes an eccentric drive pin (85a) that is offset from a rotational axis (A1) of the output shaft (85).

3. The motorized bicycle front derailleur assembly (12) according to claim 2, wherein the drive link (91) has a first drive link end (91a) pivotally coupled to the eccentric drive pin (85a).

4. The motorized bicycle front derailleur assembly according to claim 3, wherein the motor linkage (34) includes a non-rigid connection (92, 93) that connects a second drive link end (91b) of the drive link (91) to the derailleur linkage (41).

5. The motorized bicycle front derailleur assembly according to claim 4, wherein the non-rigid connection (92, 93) includes a biasing element (93) configured and arranged to apply an urge force that normally maintains a substantially rigid connection between the drive link (91) and the derailleur linkage (41).

6. The motorized bicycle front derailleur assembly according to claim 5, wherein the front derailleur (31) further includes a mechanical adjustment device (45, 45c, 45d, 49, 50) configured and arranged to change at least one of the first and second shift positions of the chain guide (40) relative to the fixing body (42).

7. The motorized bicycle front derailleur assembly according to claim 6, wherein the mechanical adjustment device (45, 45c, 45d, 49, 50) is configured and arranged to change both of the first and second shift positions of the chain guide (40) relative to the fixing body (42).

8. The motorized bicycle front derailleur assembly according to claim 6, wherein the mechanical adjustment device (45, 45c, 45d, 49, 50) includes a first adjustment screw (50) configured and arranged to change the first shift position of the chain guide (40) relative to the fixing body (42).

9. The motorized bicycle front derailleur assembly according to claim 8, wherein the mechanical adjustment device (45, 45c, 45d, 49, 50) further includes a second adjustment screw (49) configured and arranged to change the second shift position of the chain guide (40) relative to the fixing body (42).

10. The motorized bicycle front derailleur assembly according to claim 1 wherein the front derailleur (31) further includes a mechanical adjustment device (45, 45c, 45d, 49, 50) configured and arranged to change at least one of the first and second shift positions of the chain guide (40) relative to the fixing body (42).

11. The motorized bicycle front derailleur assembly according to claim 10, wherein the mechanical adjustment device (45, 45c, 45d, 49, 50) is configured and arranged to change both of the first and second shift positions of the chain guide (40) relative to the fixing body (42).

12. The motorized bicycle front derailleur assembly according to claim 10, wherein the mechanical adjustment device (45, 45c, 45d, 49, 50) includes a first adjustment screw (50) configured and arranged to change the first shift position of the chain guide (40) relative to the fixing body (42).

13. The motorized bicycle front derailleur assembly according to claim 12, wherein the mechanical adjustment device (45, 45c, 45d, 49, 50) further includes a second adjustment screw (49) configured and arranged to change the second shift position of the chain guide (40) relative to the fixing body (42).

14. The motorized bicycle front derailleur assembly according to claim 10, wherein the mechanical adjustment device (45, 45c, 45d, 49, 50) includes an adjustment screw (49, 50) threadedly coupled to one of the fixing body (42), the chain guide (40) and the derailleur linkage (41) with a free end of the adjustment screw (49, 50) contacting one of the fixing body, the chain guide and the derailleur linkage in which the adjustment screw is not threadedly coupled thereto.

15. The motorized bicycle front derailleur assembly according to claim 10, wherein the mechanical adjustment device (45, 45c, 45d, 49, 50) includes an adjustment screw (49, 50) threadedly coupled to one of the motor linkage (34) and the derailleur linkage (41) with a free end of the adjustment screw contacting one of the motor linkage and the derailleur linkage in which first adjustment screw is not threadedly coupled thereto.

16. The motorized bicycle front derailleur assembly according to claim 10, wherein the output shaft (85) includes an eccentric drive pin (85a) that is offset from a rotational axis of the output shaft (A₁).

17. The motorized bicycle front derailleur assembly according to claim 1, wherein the motor unit (33) further includes a motor (62) with a driving shaft (75) and a drive train (63) coupled between of the driving shaft (75) and the output shaft (85).

18. The motorized bicycle front derailleur assembly according to claim 1, wherein the drive link (91) has a first drive link end (91a) operatively coupled to the output shaft (85) and a second drive link end (91b) with a longitudinal axis (L) extending between the first and second drive link ends, and
the longitudinal axis (L) of the drive link (91) having a first orientation when the chain guide is in the first shift position and a second orientation when the chain guide is in the second shift position with the first and second orientations of the longitudinal axis of the drive link being changed less than forty five degrees.

19. The motorized bicycle front derailleur assembly according to claim 18, wherein the output shaft (85) includes an eccentric drive pin (85a) that is offset from a rotational axis of the output shaft (A₁).

20. The motorized bicycle front derailleur assembly according to claim 19, wherein the motor linkage (34) includes a non-rigid connection (92, 93) that connects the second drive link end (91b) of the drive link to the derailleur linkage.

## Patentansprüche

1. Motorisierte vordere Umwerferbaugruppe (12) für Fahrräder, aufweisend:
eine Motoreinheit (33), die konfiguriert und angeordnet ist, um sich um eine Abtriebswelle (85) in einer ersten Drehrichtung und einer zweiten Drehrichtung, die entgegengesetzt zur ersten Drehrichtung ist, zu drehen;
einen vorderen Umwerfer (31), der einen Befestigungskörper (42), eine Kettenführung (40) und ein Umwerfer-Gelenkgetriebe (41) beinhaltet, das zwischen dem Befestigungskörper (42) und der Kettenführung (40) funktionsmäßig verbunden ist, um sich zwischen einer ersten Schaltposition und einer zweiten Schaltposition zu bewegen; und
ein Motor-Gelenkgetriebe (34), das mit der Abtriebswelle (85) der Motoreinheit (33) und dem Gelenkgetriebe (41) des vorderen Umwerfers funktionsmäßig verbunden ist, um die Kettenführung (40) aus der ersten Schaltposition in die zweite Schaltposition zu bewegen, und zwar bei Drehen der Abtriebswelle (85) in der ersten Drehrichtung, und um die Kettenführung (40) aus der zweiten Schaltposition in die erste Schaltposition zu bewegen, und zwar bei Drehen der Abtriebswelle (85) in der zweiten Drehrichtung,
wobei das Motor-Gelenkgetriebe (34) ein Antriebsgelenkstück (91) beinhaltet, das relativ zur Abtriebswelle (85) und dem Umwerfer-Gelenkgetriebe (41) konfiguriert und angeordnet ist, um die Kettenführung (40) zwischen der ersten Schaltposition und der zweiten Schaltposition umzuschalten,
**dadurch gekennzeichnet, dass**
das Antriebsgelenkstück (91) zwei Gelenkstückenden (91a, 92b) als Schwenkpunkte aufweist.

2. Motorisierte vordere Umwerferbaugruppe (12) für Fahrräder nach Anspruch 1, wobei
die Abtriebswelle (85) einen exzentrischen Antriebsstift (85a) beinhaltet, der gegen eine Drehachse (A1) der Abtriebswelle (85) versetzt ist.

3. Motorisierte vordere Umwerferbaugruppe (12) für Fahrräder nach Anspruch 2, wobei
das Antriebsgelenkstück (91) ein erstes Antriebsgelenkstückende (91a) aufweist, das mit dem exzentrischen Antriebsstift (85a) schwenkbar verbunden ist.

4. Motorisierte vordere Umwerferbaugruppe für Fahrräder nach Anspruch 3, wobei
das Motor-Gelenkgetriebe (34) eine nicht-starre Verbindung (92, 93) beinhaltet, die ein zweites Antriebsgelenkstückende (91b) des Antriebsgelenkstückes (91) mit dem Umwerfer-Gelenkgetriebe (41) verbindet.

5. Motorisierte vordere Umwerferbaugruppe für Fahrräder nach Anspruch 4, wobei
die nicht-starre Verbindung (92, 93) ein Vorspannelement (93) beinhaltet, das konfiguriert und angeordnet ist, um eine Vorspannkraft aufzubringen, die normalerweise eine im Wesentlichen starre Verbindung zwischen dem Antriebsgelenkstück (91) und dem Umwerfer-Gelenkgetriebe (41) beibehält.

6. Motorisierte vordere Umwerferbaugruppe für Fahrräder nach Anspruch 5, wobei
der vordere Umwerfer (31) weiter eine mechanische Einstellvorrichtung (45, 45c, 45d, 49, 50) beinhaltet, die konfiguriert und angeordnet ist, um die erste und/oder die zweite Schaltposition der Kettenführung (40) relativ zum Befestigungskörper (42) zu verändern.

7. Motorisierte vordere Umwerferbaugruppe für Fahrräder nach Anspruch 6, wobei
die mechanische Einstellvorrichtung (45, 45c, 45d, 49, 50) konfiguriert und angeordnet ist, um sowohl die erste als auch die zweite Schaltposition der Kettenführung (40) relativ zum Befestigungskörper (42) zu verändern.

8. Motorisierte vordere Umwerferbaugruppe für Fahrräder nach Anspruch 6, wobei
die mechanische Einstellvorrichtung (45, 45c, 45d, 49, 50) eine erste Einstellschraube (50) beinhaltet, die konfiguriert und angeordnet ist, um die erste Schaltposition der Kettenführung (40) relativ zum Befestigungskörper (42) zu verändern.

9. Motorisierte vordere Umwerferbaugruppe für Fahrräder nach Anspruch 8, wobei
die mechanische Einstellvorrichtung (45, 45c, 45d, 49, 50) weiter eine zweite Einstellschraube (49) beinhaltet, die konfiguriert und angeordnet ist, um die zweite Schaltposition der Kettenführung (40) relativ zum Befestigungskörper (42) zu verändern.

10. Motorisierte vordere Umwerferbaugruppe für Fahrräder nach Anspruch 1, wobei
der vordere Umwerfer (31) weiter eine mechanische Einstellvorrichtung (45, 45c, 45d, 49, 50) beinhaltet, die konfiguriert und angeordnet ist, um die erste und/oder die zweite Schaltposition der Kettenführung (40) relativ zum Befestigungskörper (42) zu verändern.

11. Motorisierte vordere Umwerferbaugruppe für Fahrräder nach Anspruch 10, wobei
die mechanische Einstellvorrichtung (45, 45c, 45d, 49, 50) konfiguriert und angeordnet ist, um sowohl die erste als auch die zweite Schaltposition der Kettenführung (40) relativ zum Befestigungskörper (42) zu verändern.

12. Motorisierte vordere Umwerferbaugruppe für Fahrräder nach Anspruch 10, wobei
die mechanische Einstellvorrichtung (45, 45c, 45d, 49, 50) eine erste Einstellschraube (50) beinhaltet, die konfiguriert und angeordnet ist, um die erste Schaltposition der Kettenführung (40) relativ zum Befestigungskörper (42) zu verändern.

13. Motorisierte vordere Umwerferbaugruppe für Fahrräder nach Anspruch 12, wobei
die mechanische Einstellvorrichtung (45, 45c, 45d, 49, 50) weiter eine zweite Einstellschraube (49) beinhaltet, die konfiguriert und angeordnet ist, um die zweite Schaltposition der Kettenführung (40) relativ zum Befestigungskörper (42) zu verändern.

14. Motorisierte vordere Umwerferbaugruppe für Fahrräder nach Anspruch 10, wobei
die mechanische Einstellvorrichtung (45, 45c, 45d, 49, 50) eine Einstellschraube (49, 50) beinhaltet, die entweder mit dem Befestigungskörper (42) oder der Kettenführung (40) oder dem Umwerfer-Gelenkgetriebe (41) verschraubbar verbunden ist, wobei ein freies Ende der Einstellschraube (49, 50) entweder mit dem Befestigungskörper oder der Kettenführung oder dem Umwerfer-Gelenkgetriebe in Kontakt ist, wobei die Einstellschraube nicht mit diesem/dieser verschraubbar verbunden ist.

15. Motorisierte vordere Umwerferbaugruppe für Fahrräder nach Anspruch 10, wobei
die mechanische Einstellvorrichtung (45, 45c, 45d, 49, 50) eine Einstellschraube (49, 50) beinhaltet, die entweder mit dem Motor-Gelenkgetriebe (34) oder dem Umwerfer-Gelenkgetriebe (41) verschraubbar verbunden ist, wobei ein freies Ende der Einstellschraube entweder mit dem Motor-Gelenkgetriebe (3) oder dem Umwerfer-Gelenkgetriebe (41) in Kontakt ist, wobei die erste Einstellschraube nicht mit diesem/dieser verschraubbar verbunden ist.

16. Motorisierte vordere Umwerferbaugruppe für Fahrräder nach Anspruch 10, wobei die Abtriebswelle (85) einen exzentrischen Antriebsstift (85a) beinhaltet, der gegen eine Drehachse der Abtriebswelle (A₁) versetzt ist.

17. Motorisierte vordere Umwerferbaugruppe für Fahrräder nach Anspruch 1, wobei
die Motoreinheit (33) weiter einen Motor (62) mit einer Antriebswelle (75) und einen Antriebsstrang (63) beinhaltet, der zwischen der Antriebswelle (75) und der Abtriebswelle (85) verbunden ist.

18. Motorisierte vordere Umwerferbaugruppe für Fahrräder nach Anspruch 1, wobei
das Antriebsgelenkstück (91) ein erstes Antriebsgelenkstückende (91a), das mit der Abtriebswelle (85) funktionsmäßig verbunden ist, und ein zweites Antriebsgelenkstückende (91b) aufweist, wobei sich eine Längsachse (L) zwischen den ersten und zweiten Antriebsgelenkstückenden erstreckt, und
die Längsachse (L) des Antriebsgelenkstücks (91) eine erste Orientierung hat, wenn sich die Kettenführung in der ersten Schaltposition befindet, und eine zweite Orientierung hat, wenn sich die Kettenführung sich in der zweiten Schaltposition befindet, wobei die erste und zweite Orientierung der Längsachse des Antriebsgelenkstücks um weniger als 45° verändert sind.

19. Motorisierte vordere Umwerferbaugruppe für Fahrräder nach Anspruch 18, wobei die Abtriebswelle (85) einen exzentrischen Antriebsstift (85a) beinhaltet, der gegen eine Drehachse der Abtriebswelle (A₁) versetzt ist.

20. Motorisierte vordere Umwerferbaugruppe für Fahrräder nach Anspruch 19, wobei das Motor-Gelenkgetriebe (34) eine nicht-starre Verbindung (92, 93) beinhaltet, die das zweite Antriebsgelenkstückende (91b) des Antriebsgelenkstückes mit dem Umwerfer-Gelenkgetriebe verbindet.

## Revendications

1. Ensemble de dérailleur avant de bicyclette à moteur (12) comprenant :
une unité motrice (33) configurée et agencée pour faire tourner un arbre de sortie (85) dans une première direction de rotation et dans une deuxième direction de rotation qui est opposée à la première direction de rotation ;
un dérailleur avant (31) incluant un corps de fixation (42), un guide de chaîne (40) et une tringlerie de dérailleur (41) couplée de manière fonctionnelle entre le corps de fixation (42) et le guide de chaîne (40) pour un déplacement entre une première position de changement de vitesse et une deuxième position de changement de vitesse ; et
une tringlerie de moteur (34) couplée de manière fonctionnelle à l'arbre de sortie (85) et à la tringlerie de dérailleur (41) pour déplacer le guide de chaîne (40) de la première position de changement de vitesse à la deuxième position de changement de vitesse lors de la rotation de l'arbre de sortie (85) dans la première direction de rotation et pour déplacer le guide de chaîne (40) de la deuxième position de changement de vitesse à la première position de changement de vitesse lors de la rotation de l'arbre de sortie (85) dans la deuxième direction de rotation,
la tringlerie de moteur (34) incluant une biellette d'entraînement (91) configurée et agencée par rapport à l'arbre de sortie (85) et à la tringlerie de dérailleur (41) pour faire passer le guide de chaîne (40) de la première position de changement de vitesse à la deuxième position de changement de vitesse et vice versa
**caractérisé en ce que**
la biellette d'entraînement (91) comprend deux extrémités de biellette (91a, 91b) servant de points de pivotement.

2. Ensemble de dérailleur avant de bicyclette à moteur (12) selon la revendication 1, dans lequel l'arbre de sortie (85) comprend une broche d'entraînement excentrique (85a) qui est décalée par rapport à un axe de rotation (A1) de l'arbre de sortie (85).

3. Ensemble de dérailleur avant de bicyclette à moteur (12) selon la revendication 2, dans lequel la biellette d'entraînement (91) a une première extrémité de biellette d'entraînement (91a) couplée de manière pivotante à la broche d'entraînement excentrique (85a).

4. Ensemble de dérailleur avant de bicyclette à moteur selon la revendication 3, dans lequel la tringlerie de moteur (34) inclut un raccord non rigide (92, 93) qui relie une deuxième extrémité de biellette d'entraînement (91b) de la biellette d'entraînement (91) à la tringlerie de dérailleur (41).

5. Ensemble de dérailleur avant de bicyclette à moteur selon la revendication 4, dans lequel le raccord non rigide (92, 93) inclut un élément de sollicitation (93) configuré et agencé pour appliquer une force de poussée qui maintient normalement un raccord sensiblement rigide entre la biellette d'entraînement (91) et la tringlerie de dérailleur (41).

6. Ensemble de dérailleur avant de bicyclette à moteur selon la revendication 5, dans lequel le dérailleur avant (31) inclut en outre un dispositif de réglage mécanique (45, 45c, 45d, 49, 50) configuré et agencé pour changer au moins l'une des première et deuxième positions de changement de vitesse du guide de chaîne (40) par rapport au corps de fixation (42).

7. Ensemble de dérailleur avant de bicyclette à moteur selon la revendication 6, dans lequel le dispositif de réglage mécanique (45, 45c, 45d, 49, 50) est configuré et agencé pour changer les première et deuxième positions de changement de vitesse du guide de chaîne (40) par rapport au corps de fixation (42).

8. Ensemble de dérailleur avant de bicyclette à moteur selon la revendication 6, dans lequel le dispositif de réglage mécanique (45, 45c, 45d, 49, 50) comprend une première vis de réglage (50) configurée et agencée pour changer la première position de changement de vitesse du guide de chaîne (40) par rapport au corps de fixation (42).

9. Ensemble de dérailleur avant de bicyclette à moteur selon la revendication 8, dans lequel le dispositif de réglage mécanique (45, 45c, 45d, 49, 50) comprend en outre une deuxième vis de réglage (49) configurée et agencée pour changer la deuxième position de changement de vitesse du guide de chaîne (40) par rapport au corps de fixation (42).

10. Ensemble de dérailleur avant de bicyclette à moteur selon la revendication 1, dans lequel le dérailleur avant (31) inclut en outre un dispositif de réglage mécanique (45, 45c, 45d, 49, 50) configuré et agencé pour changer au moins l'une des première et deuxième positions de changement de vitesse du guide de chaîne (40) par rapport au corps de fixation (42).

11. Ensemble de dérailleur avant de bicyclette à moteur selon la revendication 10, dans lequel le dispositif de réglage mécanique (45, 45c, 45d, 49, 50) est configuré et agencé pour changer les première et deuxième positions de changement de vitesse du guide de chaîne (40) par rapport au corps de fixation (42).

12. Ensemble de dérailleur avant de bicyclette à moteur selon la revendication 10, dans lequel le dispositif de réglage mécanique (45, 45c, 45d, 49, 50) comprend une première vis de réglage (50) configurée et agencée pour changer la première position de changement de vitesse du guide de chaîne (40) par rapport au corps de fixation (42).

13. Ensemble de dérailleur avant de bicyclette à moteur selon la revendication 12, dans lequel le dispositif de réglage mécanique (45, 45c, 45d, 49, 50) comprend en outre une deuxième vis de réglage (49) configurée et agencée pour changer la deuxième position de changement de vitesse du guide de chaîne (40) par rapport au corps de fixation (42).

14. Ensemble de dérailleur avant de bicyclette à moteur selon la revendication 10, dans lequel le dispositif de réglage mécanique (45, 45c, 45d, 49, 50) comprend une vis de réglage (49, 50) couplée par vissage à l'un des éléments suivants, à savoir le corps de fixation (42), le guide de chaîne (40) et la tringlerie de dérailleur (41), une extrémité libre de la vis de réglage (49, 50) étant en contact avec l'un des éléments suivants, à savoir le corps de fixation, le guide de chaîne et la tringlerie de dérailleur auquel la vis de réglage n'est pas couplée par vissage.

15. Ensemble de dérailleur avant de bicyclette à moteur selon la revendication 10, dans lequel le dispositif de réglage mécanique (45, 45c, 45d, 49, 50) comprend une vis de réglage (49, 50) couplée par vissage à l'un des éléments suivants, à savoir la tringlerie de moteur (34) et la tringlerie de dérailleur (41), une extrémité libre de la vis de réglage étant en contact avec l'un des éléments suivants, à savoir la tringlerie de moteur et la tringlerie de dérailleur auquel la vis de réglage n'est pas couplée par vissage.

16. Ensemble de dérailleur avant de bicyclette à moteur selon la revendication 10, dans lequel l'arbre de sortie (85) comprend une broche d'entraînement excentrique (85a) qui est décalée par rapport à un axe de rotation de l'arbre de sortie (A₁).

17. Ensemble de dérailleur avant de bicyclette à moteur selon la revendication 1, dans lequel l'unité motrice (33) comprend en outre un moteur (62) muni d'un arbre de commande (75) et d'organes de transmission (63) couplés entre l'arbre de commande (75) et l'arbre de sortie (85).

18. Ensemble de dérailleur avant de bicyclette à moteur selon la revendication 1, dans lequel la biellette d'entraînement (91) a une première extrémité de biellette d'entraînement (91a) couplée de manière fonctionnelle à l'arbre de sortie (85) et une deuxième extrémité de biellette d'entraînement (91b) avec un axe longitudinal (L) s'étendant entre les première et deuxième extrémités de biellette d'entraînement, et
l'axe longitudinal (L) de la biellette d'entraînement (91) a une première orientation lorsque le guide de chaîne est dans la première position de changement de vitesse et une deuxième orientation lorsque le guide de chaîne est dans la deuxième position de changement de vitesse, les première et deuxième orientations de l'axe longitudinal étant changées de moins de quarante-cinq degrés.

19. Ensemble de dérailleur avant de bicyclette à moteur selon la revendication 18, dans lequel l'arbre de sortie (85) comprend une broche d'entraînement excentrique (85a) qui est décalée par rapport à un axe de rotation de l'arbre de sortie (A₁).

20. Ensemble de dérailleur avant de bicyclette à moteur selon la revendication 19, dans lequel la tringlerie de moteur (34) inclut un raccord non rigide (92, 93) qui relie la deuxième extrémité de biellette d'entraînement (91b) de la biellette d'entraînement à la tringlerie de dérailleur.
